# EUROPEAN PATENT SPECIFICATION

(11) **EP 3 448 692 B1**
(45) Date of publication and mention of the grant of the patent: **02.03.2022**
(21) Application number: 17721808.8
(22) Date of filing: 26.04.2017
(51) Int. Cl.: B42D 25/425, B42D 25/45, B42D 25/24, B42D 25/29, B42D 25/324, B42D 25/328, B42D 25/351

(54) **METHODS OF MANUFACTURING LENS TRANSFER STRUCTURES**
VERFAHREN ZUR HERSTELLUNG VON LINSENÜBERTRAGUNGSSTRUKTUREN
PROCÉDÉS DE FABRICATION DE STRUCTURES DE TRANSFERT DE LENTILLE

(30) Priority: 29.04.2016 GB 201607480
(43) Date of publication of application: 06.03.2019
(73) Proprietor: De La Rue International Limited, Basingstoke Hampshire RG22 4BS (GB)
(72) Inventor: HOLMES, Brian William, Fleet Hampshire GU51 5HZ (GB); SUYAL, Navin, Basingstoke Hampshire RG22 4BS (GB)
(74) Representative: Gill Jennings & Every LLP
(86) International application number: PCT/GB2017/051166
(87) International publication number: WO 2017/187171

(56) References cited:
- WO-A1-2011/017741
- WO-A1-2014/070079
- WO-A1-2015/044671
- WO-A2-2011/029602
- WO-A2-2011/051670

## Description

The present invention relates to methods of manufacture of lens transfer structures for use as security devices in or on security documents, such as banknotes, passports and the like, and other objects of value.

Articles of value, and particularly documents of value such as banknotes, cheques, passports, identification documents, certificates and licences, are frequently the target of counterfeiters and persons wishing to make fraudulent copies thereof and/or changes to any data contained therein. Typically such objects are provided with a number of visible security devices for checking the authenticity of the object. By "security device" we mean a feature which it is not possible to reproduce accurately by taking a visible light copy, e.g. through the use of standardly available photocopying or scanning equipment.

One class of security devices are those which produce an optically variable effect, meaning that the appearance of the device is different at different angles of view. Such devices are particularly effective since direct copies (e.g. photocopies) will not produce the optically variable effect and hence can be readily distinguished from genuine devices.

A particular class of optically variable effect generating devices are those which make use of focussing elements such as lenses. These include moire magnifier devices, integral imaging devices and so-called lenticular devices.

Moire magnifier devices (examples of which are described in EP-A-1695121, WO-A-94/27254, WO-A-2011/107782 and WO2011/107783) make use of an array of focussing elements (such as lenses or mirrors) and a corresponding array of microimages, wherein the pitches of the focusing elements and the array of microimages and/or their relative locations are mismatched with the array of focusing elements such that a magnified version of the microimages is generated due to the moire effect. Each microimage is a complete, miniature version of the image which is ultimately observed, and the array of focussing elements acts to select and magnify a small portion of each underlying microimage, which portions are combined by the human eye such that the whole, magnified image is visualised.

This mechanism is sometimes referred to as "synthetic magnification". The magnified array appears to move relative to the device upon tilting and can be configured to appear above or below the surface of the device itself. The degree of magnification depends, inter alia, on the degree of pitch mismatch and/or angular mismatch between the focussing element array and the microimage array.

Integral imaging devices are similar to moire magnifier devices in that an array of microimages is provided under a corresponding array of lenses, each microimage being a miniature version of the image to be displayed. However here there is no mismatch between the lenses and the microimages. Instead a visual effect is created by arranging for each microimage to be a view of the same object but from a different viewpoint. When the device is tilted, different ones of the images are magnified by the lenses such that the impression of a three-dimensional image is given.

"Hybrid" devices also exist which combine features of moire magnification devices with those of integral imaging devices. In a "pure" moire magnification device, the microimages forming the array will generally be identical to one another. Likewise in a "pure" integral imaging device there will be no mismatch between the arrays, as described above. A "hybrid" moiré magnification / integral imaging device utilises an array of microimages which differ slightly from one another, showing different views of an object, as in an integral imaging device. However, as in a moire magnification device there is a mismatch between the focussing element array and the microimage array, resulting in a synthetically magnified version of the microimage array, due to the moire effect, the magnified microimages having a three-dimensional appearance. Since the visual effect is a result of the moire effect, such hybrid devices are considered a subset of moire magnification devices for the purposes of the present disclosure. In general, therefore, the microimages provided in a moire magnification device should be substantially identical in the sense that they are either exactly the same as one another (pure moire magnifiers) or show the same object/scene but from different viewpoints (hybrid devices).

Moire magnifiers, integral imaging devices and hybrid devices can all be configured to operate in just one dimension (e.g. utilising cylindrical lenses) or in two dimensions (e.g. comprising a 2D array of spherical or aspherical lenses). Lenticular devices on the other hand do not rely upon magnification, synthetic or otherwise. An array of focussing elements, typically cylindrical lenses, overlies a corresponding array of image sections, or "slices", each of which depicts only a portion of an image which is to be displayed. Image slices from two or more different images are interleaved and, when viewed through the focussing elements, at each viewing angle, only selected image slices will be directed towards the viewer. In this way, different composite images can be viewed at different angles. However it should be appreciated that no magnification typically takes place and the resulting image which is observed will be of substantially the same size as that to which the underlying image slices are formed. Some examples of lenticular devices are described in US-A-4892336, WO-A-2011/051669, WO-A-2011051670, WO-A-2012/027779 and US-B-6856462. More recently, two-dimensional lenticular devices have also been developed and examples of these are disclosed in British patent application numbers 1313362.4 and 1313363.2. Lenticular devices have the advantage that different images can be displayed at different viewing angles, giving rise to the possibility of animation and other striking visual effects which are not possible using the moire magnifier or integral imaging techniques.

An example of a known method of manufacturing a security device may be found in WO 2011/029602 A2 disclosing the preamble of claim 1.

Aspects of the present invention provide improved methods of manufacturing security devices, and in particular, those which use arrays of lenses to generate an optically variable effect.

A first aspect of the present invention provides a method of forming a lens transfer structure as defined in claim 1.

One way, known in the art, in which a lens based security device can be provided on a security document or article is by application using a lens transfer structure. Lens transfer structures known in the art typically comprise an array of lenses formed separately from the security device on a carrier layer. The carrier layer is later used to apply the lenses to the surface of a security document before being removed, leaving behind only the lens array.

Typically, lenses applied using a lens transfer structure are formed of a single transparent material having a surface relief which focusses light owing to the refractive index difference between the lens material and air. These lenses are typically formed in a carrier layer whose surface is the conjugate of the surface relief of the array of lenses. The present inventors have found that particular benefits are achieved when the lens transfer structure has lenses that are instead formed of two materials of different refractive indices, with the lens relief being present in the boundary between the two layers. A first advantage of such a construction is that the lenses inherently include a protective overcoat which protects the lens relief from damage, for example, by abrasion, which would impact the way in which the lenses focus light and hence degrade the quality of the optically variable effect. A second advantage is that the array of lenses no longer requires a relief in the uppermost surface, and instead can have a substantially flat upper and lower surface, which makes the structure easier to remove from a carrier layer, which in turn can prevent warping of the lenses through internal stresses generated upon separation from the carrier layer. Finally, the substantially flat upper surface of the lens array after transfer to the security document renders the security document easier to handle.

The present invention involves the step of applying a first material over a carrier layer. This may mean that the first material is applied directly on the surface of the carrier layer; however, it is also possible that one or more additional layers will be provided between the carrier layer and the layer of first material, which should be transparent if intended to be retained over the lenses after transfer of the lens structure to a security document or article. In all embodiments, the first material is substantially transparent. The term substantially transparent is intended to cover any material which allows image formation in at least one wavelength using light which passes therethrough. In other words, a transparent material allows light of at least one wavelength to pass through without overwhelming absorption or scattering. It will be appreciated that a transparent material may appear clear, or may appear to carry a colour tint.

The first surface of the first material, i.e. the surface facing away from the carrier layer, has formed therein a lens relief structure. A lens relief structure is considered to be any surface relief which, in combination with the other layers of the finished lens transfer structure, causes focussing of light.

A layer of second, curable material is applied over the first surface of the layer of first material. Again, the word "over" is intended to mean that the second material may be directly in contact with the first surface of the first material, or, in some cases, may be spaced from the first material by one or more layers. The second material is a curable material, which means that the material hardens (i.e. becomes more viscous and preferably solid) in response to exposure to curing energy which may for example comprise heat, radiation (e.g. UV) or an electron beam. The hardening involves a chemical reaction such as cross-linking rather than mere physical solidification, e.g. as is experienced by most materials upon cooling. The low viscosity of the pre-curing state facilitates application of the second material so that it conforms to the lens relief structure in the first material. As with the first material, the second material is substantially transparent (at least after curing), and has a refractive index which is different from that of the first material (at least after curing). The refractive index difference, together with the lens relief between the two layers allows the two materials to focus light and thereby act as a lens or lens array. Furthermore, the refractive index difference is constant, whereas lens transfer structures, as known in the art, which use an lens-air interface to focus light rely on a refractive index difference which may vary.

The second, material is cured at least partly, and preferably is substantially fully cured. As mentioned above, curing the second material increases the viscosity or hardness, and acts to bond the second material with the rest of the lens transfer structure. The type of curing performed will depend on the type of material used as the second material, but curing typically involves exposure to light or heat. As will be described below, typically the curable material is a resin, and curing increases the degree of cross-linking within the material.

In all embodiments, the carrier layer is removable from the layer of first material. This permits the lens structure formed by the at least first and second materials to be transferred, for example, to a security document, for use as a security element.

As mentioned above, it is preferred that the layer of second, curable material is applied over the first surface of the layer of first material, in contact with the first surface of the layer of first material. In such embodiments, the lens relief structure defines the boundary between the two materials.

To facilitate removal of the carrier layer from the rest of the lens transfer structure, preferably the method further comprises applying a release layer over the first surface of the carrier layer, wherein applying the layer of first material over the first surface of the carrier layer comprises applying the layer of first material over the release layer such that the release layer is disposed between the carrier layer and the layer of first material. By release layer, it is meant a material that provides relatively weak adhesion between the layers either side of it. This reduces the force required to separate the carrier layer from the rest of the lens transfer structure, and hence can reduce internal stresses generated within the first and second materials. Suitable release layers include waxes, silicones and blends of wax and acrylics, as will be understood by one skilled in the art. While preferable, in alternative embodiments, release of the carrier layer may be facilitated in other ways. For example, the carrier layer may be provided with a first surface that is corona treated, as is well known in the art.

It is likely that the carrier layer will be removed from the rest of the lens transfer structure by peeling. In which case, to ensure that the carrier layer is removed from the lens structure when peeling is attempted without damage or removal of any other layer, preferably, the lowest peel strength between any two layers between and including the carrier layer and the layer of first material is the lowest peel strength in the lens transfer structure.

The lenses formed by the layers of first and second material will have a focal length, and many optical devices place an object, or objects, in the region of the focal point of the lenses to generate the optical effect, and, depending on the focal length of the lenses, this can necessitate some degree of optical spacing of the lenses from the object. In some embodiments, only the lenses will be intended to be transferred to a substrate, such as a security document, and the optical spacing, if needed, will be provided by an at least partially transparent area of the substrate. However, preferably, the method further comprises applying one or more optical spacer layers over the first surface of the layer of second curable material, each optical spacer layer having opposing first and second surfaces. These one or more optical spacer layers may be substantially transparent and may advantageously bring an outer surface of the lens transfer structure closer in line with the focal point or focal plane of the device. However, it is also possible that the layer of second material is provided with a thickness that provides sufficient optical spacing for the device, and leaves the first surface of the layer of second material substantially in line with a focal point or focal plane of the device.

In practice, the lenses will typically be viewed, after application, from the side of the structure on which the carrier layer had been provided. The lens relief structure formed in the layer of first material can therefore be considered the conjugate of the relief of the lenses. Preferably, the method comprises either forming a lens relief structure in the first surface of the layer of first material comprises forming the conjugate of a convex relief structure in the first surface of the layer of first material, wherein the first refractive index is higher than the second refractive index; or forming a lens relief structure in the first surface of the layer of first material comprises forming the conjugate of a concave relief structure in the first surface of the layer of first material, wherein the first refractive index is lower than the second refractive index.

As outlined above, some of the most common optical devices are moire magnifier devices, integral imaging devices and so-called lenticular devices. Typically, these devices make use of a regular array of microlenses, and therefore preferably, the lens relief structure defines a regular array of lenses. Further, preferably the lens relief structure defines an array of microlenses, for example, having a base diameter of less than 250 µm and preferably in the range 5-80 µm, more preferably in the range 5-50 µm, and further preferably 5-30 µm. These may, for example, be cylindrical lenses, or spherical or aspherical lenses.

While it is possible that the lens structure could be configured to be transferred to a document or device which has thereon the objects, or image elements, intended to cooperate with the lenses, it is preferable that the method further comprises forming an array of image elements, overlapping the lens relief structure in the first surface of the layer of first material. As described above, the image elements may be microimages, suitable for use in a moire magnification device or integral imaging device, or may be image sections, suitable for use in a lenticular device. Preferably this comprises forming an array of image elements on one of the first surface of the layer of second, curable material and the first or second surface of one of the one or more optical spacer layers, if provided. Further, preferably forming an array of image elements comprises printing an array of image elements. However, other methods of forming image elements are known.

In particularly preferable embodiments, forming an array of image elements comprises forming an array of image elements defined by one or more diffraction relief structures. For example, the image elements may be defined by diffractions gratings or other such first order or zero order diffractive structures. In other cases, forming an array of image elements comprises forming an array of image elements defined by one or more arrays of nanostructures. For example, arrays of nanostructures include moth-eye nanostructures and other such nanostructured arrays. Examples of image elements formed by moth-eye structures may be found in WO 2005106601 A2, while examples of nanostructured arrays may be found in WO 2014179892 A1.

Forming the array of image elements as either a diffraction relief structure or an array of nanostructures may comprise embossing or cast curing the array of image elements into the surface of an image element receiving layer. In some cases, forming the array of image elements comprises forming the array of image elements in an image element layer separate from the lens transfer structure and applying the image element layer such that it overlaps the lens relief structure. In other cases, the array of image elements may be formed in the first surface of the second layer of curable material or in the first or second surface of one of the one or more optical spacer layers, if provided.

In other embodiments, forming an array of image elements comprises forming an array of image elements defined by a discontinuous metal layer. Such image elements may be produced by patterning of a metal layer through the use of a photosensitive resist material and exposure the resist to appropriate radiation through a mask. Depending on the nature of the resist material, exposure to the radiation either increases or decreases its solubility in certain etchants, such that the pattern on the mask is transferred to the metal layer when the resist-covered metal substrate is subsequently exposed to the etchant. For instance, EP 0987599 A2 discloses a negative resist system in which the exposed photoresist becomes insoluble in the etchant upon exposure to ultraviolet light. The portions of the metal layer underlying the exposed parts of the resist are thus protected from the etchant and the final pattern formed in the metal layer is the "negative" of that carried on the mask. In contrast, WO 2016/198876 A1 discloses a positive resist system in which the exposed photoresist becomes more soluble in the etchant upon exposure to ultraviolet light. The portions of the metal layer underlying the unexposed parts of the resist are thus protected from the etchant and the final pattern formed in the metal layer is the same as that carried on the mask. Again, the image elements defined by the discontinuous metal layer may be formed on an image element layer separate from the first and second layers of material, which is then applied such that it overlaps the lens relief structure. Alternatively, the discontinuous metal layer may be provided on the first surface of the second layer of curable material or on the first or second surface of one of the one or more optical spacer layers, if provided.

Yet further image element defining structures may include stepped surface relief optical structures known as Aztec structures (see for example WO 2005/115119 A2) or simple scattering structures.

Printed image elements are typically limited by conventional printing processes to a minimum line width of approximately 10 micrometres. This restricts the smallest possible lens base diameter, i.e. the lens base diameter must be on the order of 10 micrometres. With this minimum lens base diameter, providing a structure which is not overly thick, i.e. which has a sufficiently short focal length of the lenses, requires the generation of a large refractive index difference between the first and second layers of material. However, embodiments which form image elements using diffraction structures, nanostructures or a discontinuous metal layer are particularly preferable since image elements defined by these means allow very small image elements to be defined. This, in turn, allows smaller diameter lenses to be used, which can have the short focal lengths required for a thin overall structure without a large refractive index difference between the first and second materials.

As mentioned, in some embodiments, the array of image elements comprises an array of microimage elements, the array of microimage elements having a pitch and/or orientation different from the pitch and/or orientation of an array of lenses formed by the lens relief structure such that a magnified version of the microimage elements is displayed as a result of the moire effect. Alternatively, the array of image elements may comprise at least a first set of image element portions, each image element portion comprising a portion of a first image to be displayed and being associated with a respective lens formed by the lens relief structure.

The present inventors have identified that it would be preferable to provide a lens transfer structure that combines the optically variable effect generated by an array of lenses with an additional optically variable effect, thereby increasing yet further the difficulty of producing a convincing counterfeit. According to the invention, the method comprises forming a diffraction relief structure the first surface of the layer of second, curable material or in the first or second surface of one of the one or more optical spacer layers, if provided. The diffraction relief structures, such as diffraction gratings, holograms, Kinegrams etc. may be provided in a surface close to the focal point or focal plane of the lenses, in which case the two optical effects will cooperate, or may be provided away from the focal point or plane, in which case they may appear superimposed, but nonetheless separate.

It is possible to increase the brightness of the effect produced by a diffraction relief structure, and thereby improve the appearance of the eventual device by providing the diffraction relief with a coating of a reflection enhancing material. Therefore, preferably the method further includes providing a reflection enhancing material over the diffraction relief structure. The same interpretation of the word over is intended to apply here as above, however it is preferable that the reflection enhancing material be provided so it follows the relief structure by being provided directly on the diffraction relief structure. Preferably the reflection enhancing layer is a substantially transparent high refractive index material, such as a metal oxide, and further, preferably the reflection enhancing material has a refractive index greater than 1.5, preferably greater than 1.75, more preferably greater than 2.0. In all of the above cases, it preferable that the reflection enhancing material is provided over the diffraction relief structure using a vacuum deposition process.

A second type of optically variable effect generating structure that may be implemented instead of, or as well as, a diffractive relief structure is a reflective and/or refractive relief structure. The invention also comprises forming a reflective and/or refractive relief structure in the first surface of the layer of second curable material. A reflective or refractive relief structure may be one which has a relief structure that is coarser than that of a diffractive structure, for example, having elements with a width along the repeat direction greater than 10 µm. A reflective or refractive structure may be one such as an array of facets which could be different types of prisms or pyramidal structures. Reflective elements such as facets can be configured to display different intensities (i.e. brightnesses) at different viewing angles. Examples of reflective/refractive facets may be found in EP 1047960.

In comparative examples, the optically variable effect generating structure may be implemented as an iridescent amplitude interference material which displays different colours at different viewing angles. Examples of such a material include thin-film interference structures, interference pigments, pearlescent pigments, liquid crystal film and pigments, photonic crystals and the like. Thin film interference structures comprise repeating layers of different refractive indices; examples can include purely dielectric stacks (metal oxide or polymer) or those composed of alternate dielectric and metallic layers. Thin film interference structures are also known as Bragg stacks or 1D photonic crystals. What all of the above examples have in common is the provision of two or more closely spaced interfaces, at least one of which partially reflects and partially transmits incident light, i.e. the amplitude of the incident light is split. The transmitted portion is reflected at the second or subsequent interfaces and interferes with the portion reflected from the first or earlier interfaces, leading to constructive interference of some wavelengths and destructive interference of others, and hence a characteristic colour which varies with viewing angle.

In particularly preferable embodiments, the first material is a first, curable material, and forming the lens relief structure in the first surface of the layer of first, curable material comprises casting the lens relief structure in the first surface of the layer of first, curable material using a casting member whose surface has a profile that is the conjugate of the lens relief structure, and curing, at least partly, the layer of first, curable material before applying the layer of second, curable material. While it is preferable for the first material to be curable, other methods of forming a relief structure, for example, embossing of a non-curable material may also be used. When using a first material that is curable, it is necessary to cure the material, at least partly, before applying the second material. This ensures that the first material retains the shape of the lens relief structure in its surface, and hence, ensures that the first and second materials cooperate to focus light as desired. While the first, curable material must be cured in order to retain its shape for application of the second, curable material, it need not be fully cured, and in some embodiments, curing, at least partly, the layer of second, curable material also cures, at least partly, the layer of first curable material. It should be understood here that the first material may be cured from its part-cured state to fully cured, or may simply be cured further without fully curing. Curing in this way simultaneously cures the first and second materials, and, in particular in embodiments in which the second material is in contact with the first material, can improve the bonding between the first and second material.

In some embodiments, the step of curing at least partly, the layer of second, curable material is performed by curing through the one or more optical spacer layers. This may comprise applying the second material over the first, applying one or more (preferably curable) optical spacer layers over the second material, and curing the second material by curing through the one or more optical spacer layers. This may, in addition to curing the second curable material, cure at least partly the first, curable material and/or the optical spacer layer(s). Curing through an optical spacer layer can advantageously help to bond the second material to the first and/or the optical spacer layer. The curing of the second material through the optical spacer layer may be the only curing step performed on the second material, or may take place in addition to a part cure before the application of the optical spacer layer.

It is preferable that the present method is performed in a continuous, in line manufacturing process, and hence, preferably, providing the carrier layer comprises providing a continuous web of carrier layer material. The lens transfer structure may then be formed in discrete regions on the endless web, or, preferably, the lens transfer structure may be produced by continuously performing the additional method steps, in line, along the endless web.

Preferably, applying the layer of first material over the first surface of the carrier layer comprises applying the layer of first material over the first surface of the carrier layer using a first casting member. In these embodiments, preferably, either the first casting member has a casting surface whose profile is substantially flat, and the step of forming the lens relief structure in the first surface of the layer of first material comprises forming the lens relief structure in the first surface of the layer of first material using a second casting member, the second casting member having a casting surface whose profile is a conjugate of the lens relief structure; or the first casting member has a casting surface whose profile is a conjugate of the lens relief structure, and wherein the layer of first material is applied over the first surface of the carrier layer with the lens relief structure pre-formed in the first surface of the layer of first material.

Similarly, preferably, applying the layer of second, curable material over the first surface of the layer of first material comprises applying the layer of second, curable material using a third casting member. In some embodiments, the third casting member has a casting surface whose profile is substantially flat. Alternatively, in particularly preferable embodiments, the third casting member has a surface whose profile is the conjugate of the diffraction relief structure, and the layer of second, curable material is applied over the first surface of the layer of first material with the diffraction relief structure pre-formed in the first surface of the layer of second, curable material.

In all of the above embodiments which use casting members, it is preferable that the first, second and/or third casting members are casting cylinders. This is particularly preferable when performing the method on a continuous web of carrier material for providing a means of endlessly performing the application method steps.

According to a second aspect of the invention, there is provided a method of using the lens transfer structure formed in accordance with the above comprising applying the lens transfer structure over a substrate and removing the carrier layer. This typically comprises applying the lens transfer structure such that the layers of first and second material are between the carrier layer and the substrate, before removing the carrier layer, e.g. by peeling it away from the lens structure formed by the layers of first and second material. Preferably, the substrate is a polymer or paper substrate, and preferably the substrate is a security article substrate or security document substrate.

According to a third aspect of the invention, there is provided a security article or security document having a lens structure applied using a method according to the second aspect of the invention. Here, the term lens structure means the lens transfer structure of above, after removal of the carrier layer (i.e. after transfer). A preferable security article is a security thread, strip, foil, insert or patch. A preferable security document is a banknote, an identity document, a passport, a licence, a certificate, a cheque, a visa or a stamp.

The present invention will now be described with reference to the accompanying drawings, in which:
Figure 1 shows, schematically, a system suitable for implementing the method according to a comparative example;
Figure 2 shows a cross-section of a lens transfer structure formed using the method according to the first comparative example;
Figure 3 shows a cross-section of the lens structure, formed using the method according to the first comparative example, after transfer to a security document substrate;
Figure 4 shows, schematically, a system suitable for implementing the method according to a second comparative example;
Figure 5 shows a cross-section of a lens transfer structure formed using the method according to the second comparative example;
Figure 6 shows a cross-section of the lens structure, formed using the method according to the second comparative example, after transfer to a security document substrate;
Figure 7A shows, schematically, a system suitable for implementing the method according to a first embodiment of the invention, and 7B shows a component of the system enlarged;
Figure 8 shows a cross-section of a lens transfer structure formed using the method according to the first embodiment;
Figure 9 shows a cross-section of the lens structure formed using the method according to the first embodiment, after transfer to a security document substrate;
Figure 10 shows a cross-section of a lens structure formed using a method according to a third comparative example; and
Figures 11A to 111 illustrate different examples of relief structures which may be used to define image elements in accordance with the present invention.

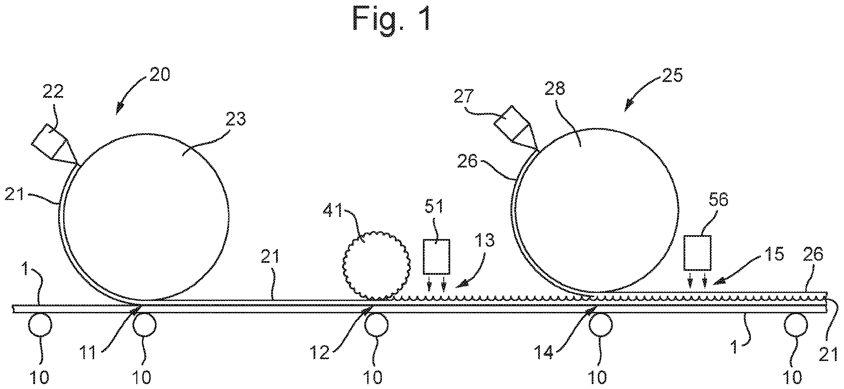

A first comparative example of a method according to the present invention will now be described in detail with reference to Figure 1. A continuous web of carrier material 1 is provided, supported at a number of points along its length by rollers 10. In the figures, the continuous web of carrier material is shown as extending along a substantially straight path for ease of understanding, however, it will be appreciated that typically the path the web of carrier material follows will change direction, for example, by wrapping part-way around one or more of the rollers 10 or by wrapping part-way around one or more of the cylinders (described below) which has the advantage of increasing the materials contact time with the cylinders. In this comparative example, the carrier is polyethylene terephthalate (PET), the upper surface of which has been corona treated to achieve a desired surface energy and release characteristic.

At a first material application position 11, a first, curable resin 21 is applied to the upper surface of the web of carrier material 1 by first material application system 20. The formulation of suitable resins will be described in greater detail below. The first material application system 20 comprises a first applicator 22 and a first cylinder 23 located above the endless web 1. The applicator continuously applies a coating of the resin 21 to the continuously rotating cylinder 23. As the cylinder rotates, it brings the resin 21 towards the first material application position 11, at which the resin is brought into contact with the web of carrier material 1 as the web is transported along the web direction. The resin is transferred on to the upper surface of the carrier material 1, and the web continues along, away from the first material application position 11 and towards a first casting position 12.

At the first casting position 12, the first, curable resin is cast so that a lens relief structure is formed in its upper surface. The casting is performed by a rotating casting cylinder 41. The casting cylinder has a surface shaped to be the conjugate of the desired lens relief structure. In this comparative example, the casting cylinder 41 has a surface which comprises an array of hemispheres arranged and sized to produce a regular, two-dimensional array of concavities in the upper surface of the first material 21. As the casting cylinder rotates, it continuously forms the lens relief structure in the surface of the moving web of carrier material 1. The web of carrier material continues away from the casting cylinder 41, having had the lens relief structure pressed into its upper surface, to a first curing position 13. At the first curing position 13, the upper surface of the first, curable material 21 is exposed to light from a first ultraviolet light source 51 such that the first, curable material is cured, fixing the lens relief structure in its upper surface. While in this comparative example, and those described below, the curing position is described as downstream of the first casting position 12 for ease of understanding, the curing position could more preferably be provided at the first casting position 12. In such comparative examples, ultraviolet light source 51 may be provided in the centre of a transparent casting cylinder (as will be described below), or beneath the web of a transparent carrier material and configured to expose the curable material 21 to curing radiation via the transparent carrier material while it is in contact with the casting cylinder.

The web of carrier material 1, now having on its upper surface cured material 21, in which is formed a lens relief structure, continues away from the first curing position 13, to a second material application position 14. At the second material application position 14, a second, curable resin 26 is applied over the upper surface of the first material 21 by second material application system 25. The second material application system 25 is structured similarly to the first, and comprises a second applicator 27 and a second cylinder 28 located above the web of carrier material 1 and first material 21. The applicator continuously applies a coating of resin 26 to the continuously rotating second cylinder 28. As the cylinder rotates, it brings the resin 26 towards the second material application position 14, at which the resin is brought into contact with the upper surface of the first material, on the web of carrier material 1, as the web is transported along the web direction. The resin is transferred on to the upper surface of the first material 21, where, owing to its relatively low viscosity in its uncured state, it conforms to the lens relief structure in the upper surface of the first material 21. The web continues along, away from the second material application position 14 and towards a second curing position 15. As mentioned above, the second curing position could alternatively be concurrent with the second material application position.

At the second curing position 15, the upper surface of the second, curable material 26 is exposed to light from a second ultraviolet light source 56 such that the second, curable material is cured, fixing the shape of the second material 26 and bonding the second material to the first material 21.

The web of finished lens transfer structure is then conveyed along, away from the apparatus shown in Figure 1, where it may be processed further, e.g. divided into individual lens transfer devices by cutting.

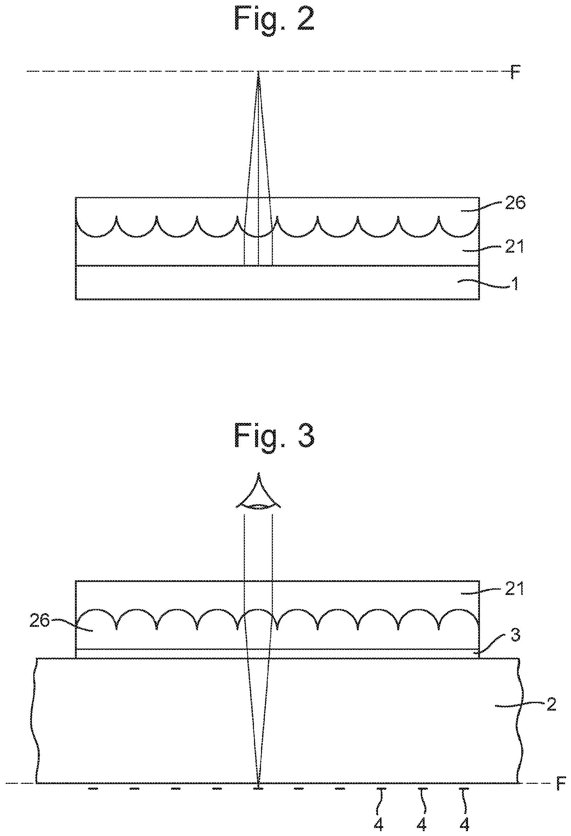

Figure 2 shows a cross-section through a lens transfer structure formed using the above described method. The lens transfer structure comprises a layer of carrier material 1, an upper surface of which has been corona treated, as described above. On the upper surface of the carrier material is a layer of first material 21, which is substantially transparent, and has a refractive index of 1.35. The upper surface of the first material 21 is shaped into a lens relief structure, which in this comparative example is a regular two-dimensional array of concavities suitable for functioning as a two-dimensional array of spherical lenses. Over the lens relief structure, i.e. over and in contact with the upper surface of the first material, is located a layer of second material 26, a lower surface of which conforms to the lens relief structure, and an upper surface of which is spaced from the lens relief structure and is substantially flat. The second material is also substantially transparent, and has a refractive index of 1.55. The refractive index of the second material 26 is higher than that of the first material 21 such that the second material filling the concavities in the surface of the first material acts as an array of spherical, convex lenses, which have a focal plane F that is, in this case, located above the upper surface of the second material 26.

Figure 3 shows the lens structure described above having been transferred onto a security article, in this case a security document, however it could equally be transferred to any substrate, for example a security element such as a security thread.. Transfer of the lens structure may be achieved by placing the upper surface of the lens transfer structure, i.e. the substantially flat surface of the second material 26, in contact with a surface of a substrate 2 of a security document, the surface of the substrate being coated with a transparent adhesive layer 3 such that the second material 26 adheres to the substrate 2. The carrier layer 1 is then peeled away from the lens structure, leaving the lens structure formed by layers of the first and second material 21 and 26 on the surface of the substrate. The carrier layer is removed substantially without distorting the lens array provided within the lens structure since the peel strength of the bond between the carrier layer 1 and the first material 21 is relatively low, and in particular, is lower than the peel strength of the bond between the first and second materials 21 and 26.

Figure 3 shows the lens structure on a transparent substrate 2, which may for example be a polymer, such as biaxially oriented polypropylene (BOPP) as used in polymer banknotes. On a surface of the substrate 2 opposite to the lens structure is located an array of image elements 4 corresponding to the array of lenses provided by the lens structure and located substantially in the focal plane of the array of lenses, as is well known in the art.

Examples of suitable materials for forming the transparent first and second layers 21 and 26 will now be provided. For a simple transparent material, just one of the material components indicated below could be used, but more usually, the material will comprise a mixture (co-polymer or blend) of two or more of the components listed, in order to achieve not only the required optical properties but also desirable mechanical properties. The "high refractive index" materials listed below have a refractive index of about 1.55 or more, and the "low refractive index" materials about 1.45 or less. It will be appreciated that the refractive indices of the materials can be selected by the skilled person to produce lenses which operate as desired, with a specific focal length. Where available, the approximate refractive index (RI) of each component is indicated below. In the above comparative example, both of the materials also comprise a curable component and examples of these are provided below. However it is noted that in some embodiments of the present invention, the first material is not curable.

Examples of high refractive index components -
Metal containing acrylates:
zirconium acrylate (Sigma Aldrich Cat. No. 686239)
hafnium acrylate (Sigma Aldrich Cat. No. R686212)
zirconium carboxyethyl acrylate (Sigma Aldrich Cat. No. 686247)
hafnium carboxyethyl acrylate (Sigma Aldrich Cat. No. 686220)

Fluorene acrylates based monomers-
(Miramer is a trade name of Miwon Chemicals, Korea)-
Miramer HR6040
Miramer HR6042
Miramer HR6060
Miramer HR6100

High RI Nano particulate dispersions -
Unidic EPC-1027 (DIC Corporation, Japan)
SHR 1075 (Miwon Chemicals, Korea)

Sulfur containing acrylate-
Phenylthioethyl acrylate, (Dichem Korea) - RI 1.560
1-naphthylthio ethyl acrylate (Dichem Korea) - RI 1.61

Standard acrylates-
Miramer M240 (Bisphenol A ethoxylated acrylate) - RI 1.537
Miramer M2100 (Phenoxy Benzyl Acrylate) - RI 1.565
Miramer M1142 (1-Ethoxylated -o-phenylphenol acrylate) - RI 1.577
Miramer HR2582 (Urethane Acrylate) - RI- 1.595
Miramer HR2200 (Epoxy acrylate) - RI- 1.559
Miramer HR3000 (Urethane acrylate) - RI 1.571
Miramer HR3200 (Urethane acrylate) - RI 1.565
Miramer HR3700 (Urethane acrylate) - RI 1.585
Miramer HR3800 (Urethane acrylate) - RI 1.573
HR4000 (Urethane acrylate, RI 1.582)

Examples of low refractive index components:
Fluoro-acrylate monomers from the following-
PDFA - pentadecafluorooctyl acrylate - RI 1.3390
TFA = 2,2,2-trifluoroethyl acrylate
HFBA- heptafluorobutyl acrylate - RI 1.3670
HDFA= 1H, 1H,2H,2H-heptadecafluorodecyl acrylate,
HFIPA = hexafluoroisopropy acrylate,
TDFA= 1H, 1H,2H,2H-tridecafluorooctyl acrylate

Tetrafluoro-3-(heptafluoropropoxy)propyl acrylate - RI 1.3460
Tetrafluoro-3-(pentafluoroethoxy)propyl acrylate - RI 1.3480
Tetrafluoroethylene - RI 1.3500
Undecafluorohexyl acrylate - RI 1.3560
Nonafluoropentyl acrylate - RI 1.3600
Tetrafluoro-3-(trifluoromethoxy)propyl acrylate - RI 1.3600
Pentafluorovinyl propionate - RI 1.3640
Trifluorovinyl acetate - RI 1.3750
Octafluoropentyl acrylate - RI 1.3800
Methyl 3,3,3-trifluoropropyl siloxane - RI 1.3830
Pentafluoropropyl acrylate - RI 1.3850

1H, 1H-Heptafluorobutyl(meth)acrylate,
1H,1H,5H-octafluoropentyl(meth)acrylate,
2,2,3,4,4,4-Hexafluorobutyl(meth)acrylate,
perfluorooctylethyl(meth)acrylate,
trifluoroethyl(meth)acrylate,
trifluoroethyl(meth)acrylate, and
perfluorooctylethyl(meth)acrylate

Preferred commercially available examples include:
Defensa OP-188 (from DIC Japan)
Defensa OP-3801
Defensa OP- 4002
Defensa OP-4003,
Defensa OP-4004,
Sartomer CN 4002 (from Sartomer)
Viscoat 8F (from Kowa Europe GmbH)
Viscoat 3F

Fluorolink^{®} MD 700 (from Solvay Solexis Inc.),
Fluorolink^{®} MD 500, and
Fomblin^{®} MD 40

The high refractive index formulation and the low refractive index formulation may each optionally further include one or more components with higher functionality (meaning in this case a higher number of acrylic groups in the material), to increase the degree of cross-linking, which leads to reduced tackiness and improved mechanical properties. Examples of suitable higher functional acrylate components include:
trimethylolpropane triacrylate,
pentaerythritol triacrylate,
ethoxylated (3) trimethylolpropane triacrylate,
ethoxylated (3) trimethylolpropane triacrylate,
propoxylated (3) trimethylolpropane triacrylate,
ethoxylated (6) trimethylolpropane triacrylate,
tris(2-hydroxy ethyl) isocyanurate triacrylate,
dipropylene glycol diacrylate,
propoxylated (3) glyceryl triacrylate,
propoxylated (3) glyceryl triacrylate,
pentaerythritol tetraacrylate.

A curing agent is also included in both of the formulations. A range of suitable photo- and thermo- initiators are commercially available. Photo-polymerisation is preferred for the current application due to faster cure, although thermo initiation can also be used. Some examples of suitable free radical type photo-initiators are given below:
1-phenyl-2-hydroxy-2-methyl-1-propanone,
2 hydroxy 2-methyl 1-phenyl propan-1-one,
2,2-dimethoxy-1,2-di(phenyl)ethanone
1-hydroxycyclohexyl phenyl ketone,
benzophenones,
bis-acyl phosphine oxide (BAPO),
aminoketones,
thioxanthones,
(2,4,6-trimethylbenzoylphenyl phosphinate),
2-Benzyl-2-(dimethylamino)-1-[4-(4-morpholinyl)phenyl]-1-butanone

A preferred example formulation of a high refractive index transparent material is:
40 wt% DIC Unidic EPC 1027,
30 wt% Miramer HR 6042,
25 wt% Miramer HR3700.
5 wt% Photo-initiators and common surface active additives

A preferred example formulation of a low refractive index transparent material is:
50 wt% Defensa OP-188
30 wt% Viscoat 8F
15 wt% Ethoxylated (3) trimethylolpropane triacrylate,
5 wt% Photo-initiators and additives.

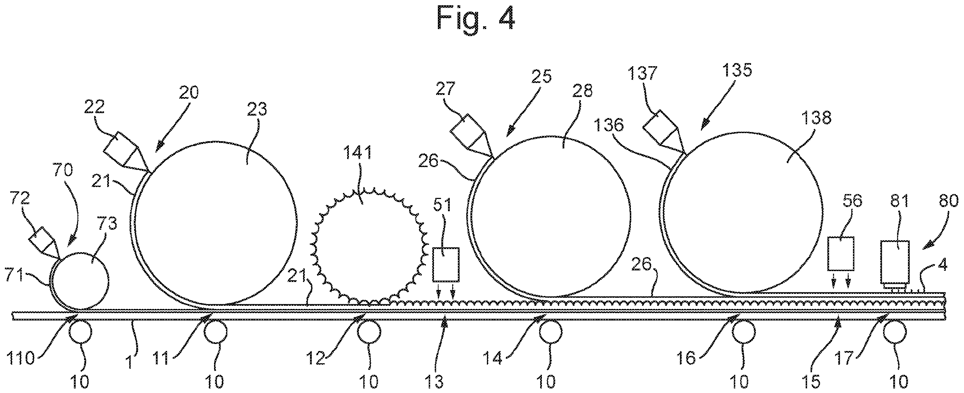

A second comparative example of a method according to the present invention will now be described with reference to Figure 4. The system shown in Figure 4 is largely the same as the system shown in Figure 1, and the differences between the two will be focussed on in the following description.

A continuous web of carrier material 1 is provided, supported at a number of points along its length by rollers 10. The web of carrier material is provided first to a release layer application position 110. At the release layer application position 110, a release layer application system 70 applies a release layer 71 to the upper surface of the web of carrier material 1. A release layer is a layer of material which provides a weak bond between the two materials on either side of it, i.e. which allows one layer to be peeled away from another. In this comparative example, the release layer is a layer of wax. The release layer application system 70 comprises an applicator 72 and a cylinder 73. The applicator continuously applies a coating of the release layer 71 to the continuously rotating cylinder 73. As the cylinder rotates, it brings the release layer 71 towards the release layer application position 110, at which the release layer is brought into contact with the web of carrier material 1 as the web is transported along the web direction. The release layer is transferred on to the upper surface of the carrier material 1, and the web continues along, away from the release layer application position 110 and towards a first material application position 12.

At a first material application position 11, a first, curable resin 21 is applied over the release layer by first material application system 20 substantially as described above with respect to Figure 1, before the web is transported along to the first casting position 12.

At the first casting position 12, the first, curable resin is cast so that a lens relief structure is formed in its upper surface. In this comparative example, the casting is performed by a rotating casting cylinder 141 whose surface comprises an array of concavities arranged and sized to produce a regular, two-dimensional array of hemispheres in the upper surface of the first material 21. As the casting cylinder rotates, it continuously forms the lens relief structure in the surface of the moving web of carrier material 1. The web of carrier material continues away from the casting cylinder 141, having had the lens relief structure pressed into its upper surface, to a first curing position 13. At the curing position 13, the upper surface of the first, curable material 21 is exposed to light from a first ultraviolet light source 51 such that the first, curable material is partly cured, fixing the lens relief structure in its upper surface.

The web of carrier material 1, now having on its upper surface cured material 21, in which is formed a lens relief structure, continues away from the first curing position 13, to a second material application position 14. At the second material application position 14, a second, curable resin 26 is applied over the upper surface of the first material 21 by second material application system 25, substantially as described above with respect to Figure 1.

After application of the second material, the web is transported along to a spacer layer application position 16. At the spacer layer application position 16, a spacer layer application system 135 applies an optical spacer layer 136 over the upper surface of the layer of second curable material. The spacer layer application system 135 is structured similarly to the first and second material application systems 20, 25, and comprises a spacer layer material applicator 137 and a cylinder 138 located above the web of carrier material 1. The applicator continuously applies a coating of resin 136 to the continuously rotating cylinder 138. The resin used as the optical spacer layer may be selected from the resins described in detail above with respect to the first and second materials, and will preferably be selected so as to have the same or similar refractive index as the material onto which it is applied, in this case the second, curable resin 26, in order to supress interfacial reflections. The resin may or may not be a curable resin. The optical spacer layer 136 may, for example, be polyethylene terephthalate (PET) or biaxially oriented polypropylene (BOPP). As the cylinder 138 rotates, it brings the resin 136 towards the spacer layer application position 14, at which the resin is brought into contact with the upper surface of the second material, as the web is transported along the web direction. The resin 136 is thereby transferred onto the upper surface of the second material 26, and the web continues along towards a second curing position 15.

At the second curing position 15, the upper surface of the optical spacer layer 136 is exposed to light from a second ultraviolet light source 56. As the optical spacer layer is substantially transparent, the second, curable material is exposed to the UV light through the optical spacer layer. The second, curable material is thereby cured, fixing the shape of the second material 26 and bonding the second material to the first material 21, and to the optical spacer layer 136.

The web next continues to an image element application position 17, at which an array of image elements 4, corresponding to the array of lenses formed by the first and second materials 21, 26, is applied to the exposed, upper surface of the optical spacer layer. In this comparative example, the image elements 4 are applied by a printing system 80 which comprises a printer 81. While a printer is shown in this comparative example, alternative comparative examples may comprise applying the image elements 4 using gravure printing, lithographic printing, flexographic printing, offset printing or screen printing and the corresponding printing system.

In other comparative examples, the printer 81 could be replaced by a casting cylinder or embossing means to define the image elements using diffraction relief structures or arrays of nanostructures, which may subsequently be metalized. In these comparative examples, the second curing position may be moved so as to be downstream of the casting cylinder or embossing means for curing the optical spacer layer and fixing the image elements therein.

In yet other comparative examples, the printer 81 could be replaced by a system for forming a discontinuous metal layer for defining the image elements. This system may comprise, for example, a means for metalizing the upper surface of the optical spacer layer, an application system for applying a photosensitive resist material, a mask and radiation source for selectively exposing the photosensitive resist material to radiation and means for exposing the structure to an etchant for etching the photosensitive resist material and metal layer to define the array of image elements. Such a system may be substantially as disclosed in WO 2016/198876 A1.

The web of finished lens transfer structure is then conveyed along, away from the apparatus shown in Figure 1, where it may be processed further, e.g. divided into individual lens transfer devices by cutting.

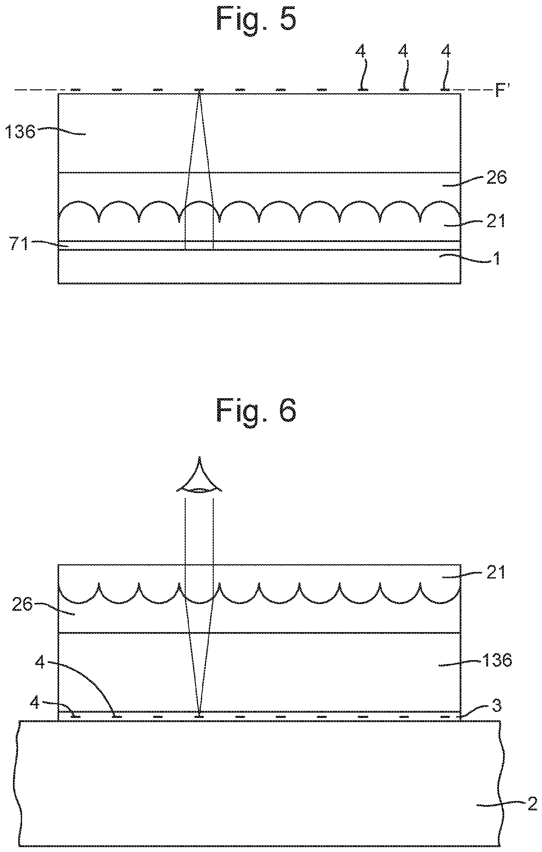

Figure 5 shows a cross-section through a lens transfer structure formed using the above described method. The lens transfer structure comprises a layer of carrier material 1, an upper surface of which has coated in a release layer 71. On the upper surface of the release layer is a layer of first material 21, which is substantially transparent, and has a refractive index of 1.55. The upper surface of the first material 21 is shaped into a lens relief structure, which in this comparative example is a regular two-dimensional array of hemispheres suitable for functioning as a two-dimensional array of spherical lenses. Over the lens relief structure, i.e. over and in contact with the upper surface of the first material, is located a layer of second material, a lower surface of which conforms to the lens relief structure, and an upper surface of which is spaced from the lens relief structure and is substantially flat. The second material is also substantially transparent, and has a refractive index of 1.35. The refractive index of the second material 26 is lower than that of the first material 21 such that the second material filling surrounding the hemispheres in the surface of the first material acts as an array of spherical, concave lenses, which have a focal plane F' that is, in this case, located approximately in line with an upper surface of the optical spacer layer 136 provided over the upper surface of the second material 26. The optical spacer layer 136 is also substantially transparent, and has a refractive index of 1.35. While a refractive index of 1.35 is used here, other refractive indexes may be selected, which may be used to alter the location of the focal plane of the lenses. On the upper surface of the optical spacer layer 136, substantially in line with the focal plane of the lenses formed by the first and second materials, is provided an array of image elements. In this case, the array of image elements 4 comprises an array of identical indicia whose pitch differs slightly from the pitch of the lenses to produce a moire magnification effect, as is known in the art.

Figure 6 shows the lens structure described above having been transferred onto a security document. Transfer of the lens structure may be achieved by placing the upper surface of the lens transfer structure, i.e. the surface of the optical spacer layer 136 having the image elements formed thereon, in contact with a surface of a substrate 2 of a security document, the surface of the substrate being coated with a transparent adhesive layer 3 such that the optical spacer layer 136 adheres to the substrate 2. The carrier layer 1 is then peeled away from the lens structure, leaving the lens structure formed by layers of the first and second material 21 and 26 on the surface of the substrate. The carrier layer is removed substantially without distorting the lens array provided within the lens structure since the release layer 71 ensures that the peel strength of the bond between the carrier layer 1 and the first material 21 is relatively low, and in particular, is lower than the peel strength of the bonds between the first and second materials 21 and 26, and the optical spacer layer.

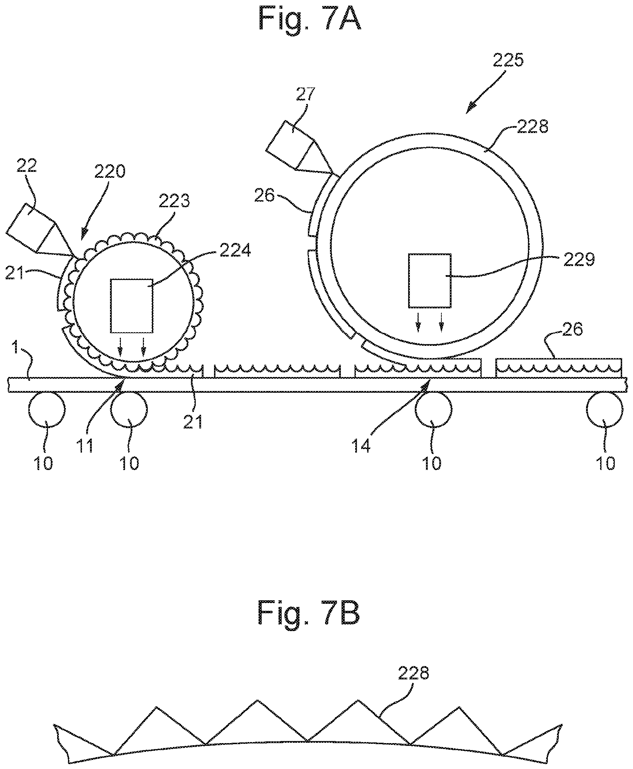

A first embodiment of a method according to the present invention will now be described with reference to Figure 7.

A continuous web of carrier material 1 is provided, supported at a number of points along its length by rollers 10, the web of carrier material having an upper surface that has been corona treated, as described above.

The web of carrier material is provided first to a first material application position 11, at which a first, curable resin 21 is applied to the upper surface of the web of carrier material 1 by first material application system 220. First material application system 220 differs from those described previously in that the cylinder forming part of the application system is a, hollow, transparent casting cylinder 223. The surface of the casting cylinder 223 is shaped to be the conjugate of the desired lens relief structure. In this embodiment, the casting cylinder 223 has a surface which comprises an array of hemispheres arranged and sized to produce a regular, two-dimensional array of concavities in the surface of the first material 21. The first material applicator 22 applies material directly to the surface of the casting cylinder, such that the first material conforms to the surface of the casting cylinder 223. In this embodiment, the material is not continuously applied over the cylinder 223, as has been described before, and instead, gaps are provided in the first material so that a plurality of spaced structures are applied to the endless web, rather than a single, endless structure. It will be appreciated that the application of first material could also be performed continuously, as has been described before, and similarly, this selective application of first material could also be applied in the first and second comparative examples.

Once the first material has been applied to the surface of the hollow, transparent casting cylinder 223, the cylinder, which continues to rotate, brings the material to the first material application position 11, at which it is brought into contact with the endless web of carrier material 1. At the first material application position 11, the first, curable material 21 is exposed to light from a first ultraviolet light source 224 located inside the transparent casting cylinder 223 so that the first, curable material is cured, fixing the lens relief structure in its upper surface and aiding in bonding the first curable material to the surface of the carrier layer 1. The first material, now cured, is removed from the surface of the casting cylinder 223 as the cylinder continues to rotate and the web is transported along the web direction.

The web continues towards a second material application position 14, at which the second material 26 is applied over the first 21 by a second material application system 225. The second material application system is similar to the first, and comprises a second material applicator 27, a hollow, transparent casting cylinder 228 and a second ultraviolet light source 229. The second material applicator 27 selectively applies the second material 26 to the surface of the cylinder 228. The cylinder 228 has a surface which is configured to form a diffractive structure in the surface of the second material 26 which does not contact the surface of the first material 21. As shown in Figure 7B, the surface of the cylinder has a corrugated appearance, the parallel ridges and furrows casting its conjugate in the upper surface of the second material 26. As the cylinder rotates, the second material is brought into contact with the upper surface of the first material at the second material application position 14, where it conforms to the shape of the lens relief structure. At the second material application position 14, the second, curable material 26 is exposed to light from a second ultraviolet light source 229 located inside the transparent casting cylinder 228 so that the second, curable material is cured, fixing the diffraction relief in the upper surface, as well as the conformed lens relief in the lower surface, and also bonding the second material 26 to the first material 21. Curing of the second, curable material 26 will also further cure the first material 21, if the first curable material is only part cured.

In order to improve the appearance of the diffraction relief structure, a substantially transparent high refractive index (HRI) coating, or reflection enhancing coating, is applied to upper surface of the layer of second material 26. This application may be performed continuously, in line, while the lens transfer structure is supported by the endless carrier material. However, typically a HRI layer is applied using a vacuum deposition process. Therefore, in this embodiment, after application of the second material 26, the web is conveyed along, away from the apparatus shown in Figure 7A, where it is divided by means not shown, so it can be subject to vacuum deposition of a HRI layer in a vacuum deposition chamber, as is well known in the art. Suitable HRI layers are well known in the art, and include, for example, zinc sulphide (ZnS), zirconium dioxide (ZrO₂) or metal oxides such as zinc oxide (ZnO), titanium dioxide (TiO₂), aluminium oxide (Al₂O₃) etc.

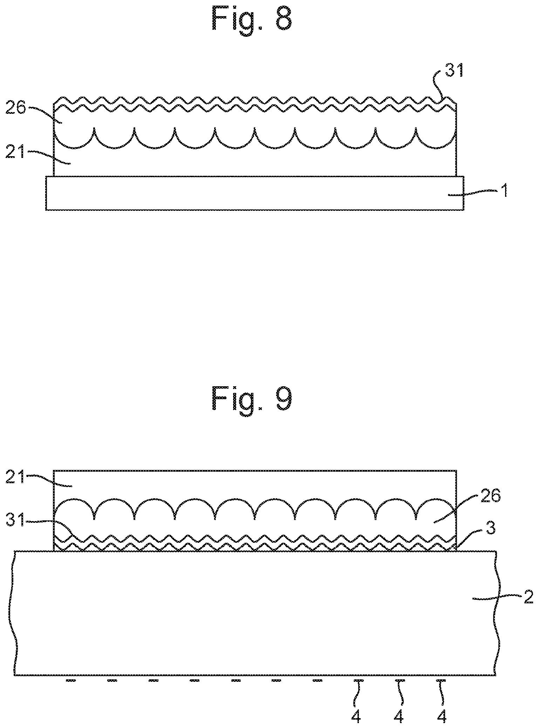

Figure 8 shows a cross-section through a lens transfer structure formed using the above described method. The lens transfer structure comprises a layer of carrier material 1, an upper surface of which has been corona treated, as described above. On the upper surface of the carrier material is a layer of first material 21, whose properties are as described above with respect to Figure 2. The upper surface of the first material 21 is shaped into a lens relief structure, which in this embodiment is a regular two-dimensional array of concavities suitable for functioning as a two-dimensional array of spherical lenses. Over the lens relief structure, i.e. over and in contact with the upper surface of the first material, is located a layer of second material 26, a lower surface of which conforms to the lens relief structure, and an upper surface of which is spaced from the lens relief structure and has formed therein a diffraction relief structure. The second material is also as described above with respect to Figure 2. The upper surface of the layer of second material 26 is coated with a HRI layer 31, which improves the replay brightness of the diffractive optical effect produced by the diffraction relief structure.

Figure 9 shows the lens structure described above having been transferred onto a security document. In this case, transfer of the lens structure may be achieved by placing the upper surface of the lens transfer structure, i.e. the HRI layer 31, in contact with a surface of a substrate 2 of a security document, the surface of the substrate being coated with a transparent adhesive layer 3 such that the HRI layer 31 adheres to the substrate 2. The carrier layer 1 is then peeled away from the lens structure, leaving the lens structure formed by layers of the first and second material 21 and 26, and the HRI layer 31, on the surface of the substrate.

Figure 9 shows the lens structure on a transparent substrate 2, which may for example be a polymer, as used in polymer banknotes. As discussed in relation to the first comparative example, on a surface of the substrate 2 opposite to the lens structure is located an array of image elements 4 corresponding to the array of lenses provided by the lens structure and located substantially in the focal plane of the array of lenses, as is well known in the art. In this example, a viewer observing the security element produced by the lens transfer structure will see the optically variable effect produced by the lenses in cooperation with the image elements 4, as well as a diffractive optical effect produced by the diffraction relief structure formed by the second material 26 in cooperation with the HRI layer 31. In this embodiment, because the diffraction relief structure is away from the focal plane of the lenses, which lies substantially in the plane of the image elements, the optical effect produced by the diffraction relief structure will be substantially undistorted by the array of lenses.

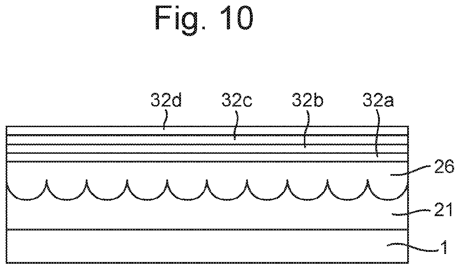

Figure 10 shows a cross-section through an alternative lens transfer structure comprising a secondary optically variable effect generating structure, which may be formed with modification to the above described systems and methods. The lens transfer structure is substantially as described above with respect to Figure 2, and comprises a carrier layer 1, layer of first material 21 and layer of second material 26. An additional optically variable effect generating structure is provided by a plurality of stacked layers 32a-d, which act as a thin film interference structure, provided on the upper surface of the layer of second material 26. The layers 32a-d are formed of either a first or second resin, the first and third layers 32a, 32c being a first resin, and the second and fourth layers being a second resin. The layers may alternatively be dielectric layers, e.g. metal oxide layers or metal and metal oxide combinations. The first and second resins may be provided by a material application system, similar to those described above comprising material applicators and cylinders. To function as an interference structure, the first and second resins are substantially transparent and have different refractive indices. When the security element provided by the lens transfer structure is observed, the boundary of the second material with the first layer 32a partially reflects and partially transmits incident light, i.e. the amplitude of the incident light is split. The transmitted portion is then either reflected or transmitted at the boundary with the second layer 32b, and so on for the boundaries provided by the third and fourth layers 32c, 32d. The light reflected by the boundaries interferes with the portion reflected from the earlier boundaries, leading to constructive interference of some wavelengths and destructive interference of others, and hence a characteristic colour which varies with viewing angle is displayed in addition to the optically variable effect provided by the lenses.

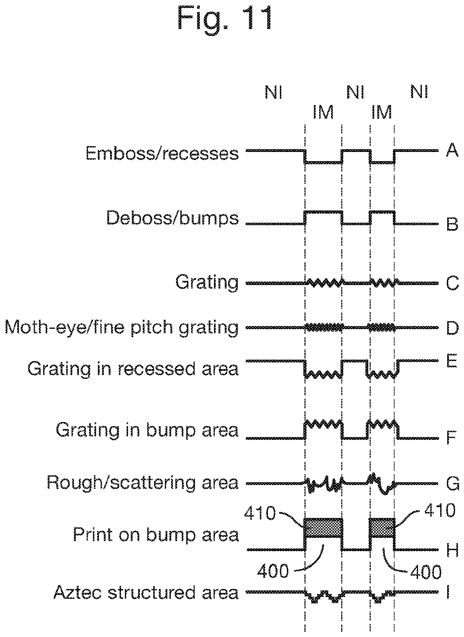

In all of the above examples, where image elements are provided, they could be formed in a variety of ways. Above, printed image elements are described, together with those defined by a discontinuous metal layer. Image elements defined by relief structures are also described, with the examples given above including diffraction relief structures and nanostructures, such as moth-eye structures. Figure 11 shows a variety of relief structures suitable for defining image elements. Figure 11A illustrates image elements (IM), in the form of embossed or recessed regions while the non-embossed portions correspond to the non-imaged regions of the elements (NI). Figure 11B illustrates image regions of the elements in the form of debossed lines or bumps.

In another approach, the relief structures can be in the form of diffraction gratings (Figure 11C) or moth eye / fine pitch gratings (Figure 11D). Where the image elements are formed by diffraction gratings, then different portions ( either within one image element or in different elements) can be formed by gratings with different characteristics. The difference may be in the pitch of the grating or rotation. This can be used to achieve a multi-colour diffractive image which will also exhibit an optically variable effect such as an animation through the mechanisms described above. A preferred method for writing such a grating would be to use electron beam writing techniques or dot matrix techniques.

Such diffraction gratings for moth eye / fine pitch gratings can also be located on recesses or bumps such as those of Figures 11A and 11B, as shown in Figures 11E and 11F respectively.

Figure 11G illustrates the use of a simple scattering structure providing an achromatic effect.

Further, in some cases the recesses of Figure 11A could be provided with an ink or the debossed regions or bumps in Figure 11B could be provided with an ink. The latter is shown in Figure 11H where ink layers 410 are provided on bumps 400. Thus the image areas of each image element could be created by forming appropriate raised regions or bumps in a resin layer provided on a transparent substrate such as the optical spacer layer 136. This could be achieved for example by cast curing or embossing. A coloured ink is then transferred onto the raised regions typically using a lithographic, flexographic or gravure process. In some examples, some image elements could be printed with one colour and other image elements could be printed with a second colour to add further complexity to the optical effect provided.

Finally, Figure 111 illustrates the use of an Aztec structure.

## Claims

1. A method of forming a lens transfer structure comprising:
providing a carrier layer (1);
applying a layer of a first material (21) over a first surface of the carrier layer (1), the layer of the first material (21) being substantially transparent and having opposed first and second surfaces, the second surface being disposed between the carrier layer (1) and the first surface;
forming a lens relief structure in the first surface of the layer of first material (21);
applying a layer of a second, curable material (26) over the first surface of the layer of first material (21), the second, curable material (26) being substantially transparent, having a refractive index different from a refractive index of the first material (21), and having opposing first and second surfaces, the second surface of the layer of second, curable material (26) being disposed between the first surface of the layer of second, curable material and the layer of first material (21), and the second surface of the layer of second, curable material (26), conforming to the lens relief structure in the first surface of the layer of first material; and
curing, at least partly, the layer of second, curable material (26);
wherein the carrier layer (1) is removable from the layer of first material (21); and
**characterised by** either:
a) forming a diffraction relief structure, a reflective relief structure and/or a refractive relief structure in the first surface of the layer of second curable material; or
b) applying one or more optical spacer layers (136) over the first surface of the layer of second curable material, each optical spacer layer having opposing first and second surfaces and forming a diffraction relief structure in the first or second surface of one of the one or more optical spacer layers.

2. A method according to claim 1, wherein the layer of second, curable material is applied over the first surface of the layer of first material, in contact with the first surface of the layer of first material.

3. A method according to claim 1 or claim 2, further comprising applying a release layer over the first surface of the carrier layer, wherein applying the layer of first material over the first surface of the carrier layer comprises applying the layer of first material over the release layer such that the release layer is disposed between the carrier layer and the layer of first material.

4. A method according to any of the preceding claims, wherein the lowest peel strength between any two layers between and including the carrier layer and the layer of first material is the lowest peel strength in the lens transfer structure.

5. A method according to any of the preceding claims, further comprising applying one or more optical spacer layers over the first surface of the layer of second curable material, each optical spacer layer having opposing first and second surfaces, wherein preferably the step of curing at least partly, the layer of second, curable material is performed by curing through the one or more optical spacer layers.

6. A method according to any of the preceding claims, wherein either
forming a lens relief structure in the first surface of the layer of first material comprises forming the conjugate of a convex relief structure in the first surface of the layer of first material, wherein the first refractive index is higher than the second refractive index; or
forming a lens relief structure in the first surface of the layer of first material comprises forming the conjugate of a concave relief structure in the first surface of the layer of first material, wherein the first refractive index is lower than the second refractive index.

7. A method according to any of the preceding claims, wherein the lens relief structure defines a regular array of lenses and/or an array of microlenses, preferably having a lens base diameter of less than 20 micrometres, preferably less than 10 micrometres, more preferably less than 5 micrometres, most preferably less than 1 micrometre.

8. A method according to any of the preceding claims, further comprising forming an array of image elements, overlapping the lens relief structure in the first surface of the layer of first material, wherein preferably forming an array of image elements comprises forming an array of image elements on one of the first surface of the layer of second, curable material and the first or second surface of one of the one or more optical spacer layers, if provided, and wherein preferably forming an array of image elements comprises printing an array of image elements or forming an array of image elements defined by one or more diffraction relief structures, by one or more arrays of nanostructures, or by a discontinuous metal layer.

9. A method according to claim 8, wherein the array of image elements comprises at least a first set of image element portions, each image element portion comprising a portion of a first image to be displayed and being associated with a respective lens formed by the lens relief structure, or wherein the array of image elements comprises an array of microimage elements, the array of microimage elements having a pitch and/or orientation different from the pitch and/or orientation of an array of lenses formed by the lens relief structure such that a magnified version of the microimage elements is displayed as a result of the moire effect.

10. A method according to any of the preceding claims, further comprising providing a reflection enhancing material over the diffraction relief structure, wherein preferably the reflection enhancing material is a substantially transparent high refractive index material, such as a metal oxide, preferably having a refractive index greater than 1.5, more preferably greater than 1.75, most preferably greater than 2.0.

11. A method according to any of the preceding claims, wherein the first material is a first, curable material, and wherein forming the lens relief structure in the first surface of the layer of first, curable material comprises casting the lens relief structure in the first surface of the layer of first, curable material using a casting member whose surface has a profile that is the conjugate of the lens relief structure, and curing, at least partly, the layer of first, curable material before applying the layer of second, curable material, wherein preferably curing, at least partly, the layer of second, curable material also cures, at least partly, the layer of first curable material.

12. A method according to any of the preceding claims, wherein applying the layer of first material over the first surface of the carrier layer comprises applying the layer of first material over the first surface of the carrier layer using a first casting member, wherein optionally either
the first casting member has a casting surface whose profile is substantially flat, and the step of forming the lens relief structure in the first surface of the layer of first material comprises forming the lens relief structure in the first surface of the layer of first material using a second casting member, the second casting member having a casting surface whose profile is a conjugate of the lens relief structure; or
the first casting member has a casting surface whose profile is a conjugate of the lens relief structure, and wherein the layer of first material is applied over the first surface of the carrier layer with the lens relief structure pre-formed in the first surface of the layer of first material.

13. A method according to any of the preceding claims, wherein applying the layer of second, curable material over the first surface of the layer of first material comprises applying the layer of second, curable material using a third casting member, wherein preferably the method comprises forming a diffraction relief structure in the first surface of the layer of second curable material and the third casting member has a surface whose profile is the conjugate of the diffraction relief structure, and wherein the layer of second, curable material is applied over the first surface of the layer of first material with the diffraction relief structure pre-formed in the first surface of the layer of second, curable material.

14. A method of using a lens transfer structure formed in accordance with any of claims 1 to 13, comprising applying the lens transfer structure over a substrate and removing the carrier layer, wherein preferably the substrate is a polymer or paper substrate and/or the substrate is a security article substrate or a security document substrate.

15. A method according to claim 14, wherein the substrate carries an array of image elements and wherein applying the lens transfer structure over the substrate comprises applying the lens transfer structure over the substrate such that, in use, the lens transfer structure cooperates with the array of image elements to exhibit an optically variable effect, wherein preferably the array of image elements comprise an array of image elements defined by one or more diffraction relief structures and/or an array of nanostructures and/or a discontinuous metal layer.

## Patentansprüche

1. Verfahren zum Ausbilden einer Linsenüberführungsstruktur, das Folgendes umfasst:
Bereitstellen einer Trägerschicht (1);
Aufbringen einer Schicht aus einem ersten Material (21) über einer ersten Oberfläche der Trägerschicht (1), wobei die Schicht aus dem ersten Material (21) im Wesentlichen transparent ist und gegenüberliegende erste und zweite Oberflächen aufweist, wobei die zweite Oberfläche zwischen der Trägerschicht (1) und der ersten Oberfläche eingerichtet ist;
Ausbilden einer Linsenreliefstruktur in der ersten Oberfläche der Schicht aus erstem Material (21);
Aufbringen einer Schicht aus einem zweiten, härtbaren Material (26) über der ersten Oberfläche der Schicht aus erstem Material (21), wobei das zweite, härtbare Material (26) im Wesentlichen transparent ist und einen Brechungsindex aufweist, der sich von einem Brechungsindex des ersten Materials (21) unterscheidet und gegenüberliegenden erste und zweite Oberflächen aufweist, wobei die zweite Oberfläche der Schicht aus zweitem, härtbarem Material (26) zwischen der ersten Oberfläche der Schicht aus zweitem, härtbarem Material und der Schicht aus erstem Material (21) eingerichtet ist und die zweite Oberfläche der Schicht aus zweitem, härtbarem Material (26) mit der Linsenreliefstruktur in der ersten Oberfläche der Schicht aus erstem Material übereinstimmt; und
Härten, wenigstens teilweise, der Schicht aus zweitem, härtbarem Material (26);
wobei die Trägerschicht (1) von der Schicht aus erstem Material (21) entfernbar ist; und
**gekennzeichnet durch** entweder:
a) Ausbilden einer Diffraktionsreliefstruktur, einer reflektierenden Reliefstruktur und/oder einer brechenden Reliefstruktur in der ersten Oberfläche der Schicht aus zweitem, härtbarem Material; oder
b) Aufbringen einer oder mehrerer optischer Abstandsschichten (136) über der ersten Oberfläche der Schicht aus zweitem, härtbarem Material, wobei jede optische Abstandsschicht gegenüberliegende erste und zweite Oberflächen aufweist, und Ausbilden einer Diffraktionsreliefstruktur in der ersten oder der zweiten Oberfläche von einer der einen oder der mehreren optischen Abstandsschichten.

2. Verfahren nach Anspruch 1, wobei die Schicht aus zweitem, härtbarem Material über der ersten Oberfläche der Schicht aus erstem Material in Berührung mit der ersten Oberfläche der Schicht aus erstem Material aufgebracht wird.

3. Verfahren nach Anspruch 1 oder 2, das ferner das Aufbringen einer Trennschicht über der ersten Oberfläche der Trägerschicht umfasst, wobei das Aufbringen der Schicht aus erstem Material über der ersten Oberfläche der Trägerschicht das Aufbringen der Schicht aus erstem Material über der Trennschicht derart umfasst, dass die Trennschicht zwischen der Trägerschicht und der Schicht aus erstem Material eingerichtet ist.

4. Verfahren nach einem der vorhergehenden Ansprüche, wobei die niedrigste Abziehfestigkeit zwischen zwei beliebigen Schichten zwischen und einschließlich der Trägerschicht und der Schicht aus erstem Material die niedrigste Abziehfestigkeit in der Linsenüberführungsstruktur ist.

5. Verfahren nach einem der vorhergehenden Ansprüche, das ferner das Aufbringen einer oder mehrerer optischer Abstandsschichten über der ersten Oberfläche der Schicht aus zweitem, härtbarem Material umfasst, wobei jede optische Abstandsschicht gegenüberliegende erste und zweite Oberflächen aufweist, wobei bevorzugt der Schritt des wenigstens teilweisen Härtens der Schicht aus zweitem, härtbarem Material durch Härten durch die eine oder die mehreren optischen Abstandsschichten hindurch durchgeführt wird.

6. Verfahren nach einem der vorhergehenden Ansprüche, wobei entweder
das Ausbilden einer Linsenreliefstruktur in der ersten Oberfläche der Schicht aus erstem Material das Ausbilden des Konjugats einer konvexen Reliefstruktur in der ersten Oberfläche der Schicht aus erstem Material umfasst, wobei der erste Brechungsindex höher als der zweite Brechungsindex ist; oder
das Ausbilden einer Linsenreliefstruktur in der ersten Oberfläche der Schicht aus erstem Material das Ausbilden des Konjugats einer konvexen Reliefstruktur in der ersten Oberfläche der Schicht aus erstem Material umfasst, wobei der erste Brechungsindex niedriger als der zweite Brechungsindex ist.

7. Verfahren nach einem der vorhergehenden Ansprüche, wobei die Linsenreliefstruktur eine regelmäßige Anordnung von Linsen und/oder eine Anordnung von Mikrolinsen definiert, die bevorzugt einen Linsenbasisdurchmesser von weniger als 20 Mikrometer, bevorzugt weniger als 10 Mikrometer, stärker bevorzugt weniger als 5 Mikrometer, am stärksten bevorzugt weniger als 1 Mikrometer aufweist.

8. Verfahren nach einem der vorhergehenden Ansprüche, das ferner das Ausbilden einer Anordnung von Bildelementen umfasst, die die Linsenreliefstruktur in der ersten Oberfläche der Schicht aus erstem Material überlappt, wobei bevorzugt das Ausbilden einer Anordnung von Bildelementen das Ausbilden einer Anordnung von Bildelementen auf der ersten Oberfläche der Schicht aus zweitem, härtbarem Material oder der ersten oder zweiten Oberfläche einer der einen oder mehreren optischen Abstandsschichten umfasst, falls bereitgestellt, und wobei bevorzugt das Ausbilden einer Anordnung von Bildelementen ein Drucken einer Anordnung von Bildelementen oder das Ausbilden einer Anordnung von Bildelementen umfasst, die durch eine oder mehrere Diffraktionsreliefstrukturen, durch eine oder mehrere Anordnungen von Nanostrukturen oder durch eine diskontinuierliche Metallschicht definiert sind.

9. Verfahren nach Anspruch 8, wobei die Anordnung von Bildelementen wenigstens einen ersten Satz von Bildelementabschnitten umfasst, wobei jeder Bildelementabschnitt einen Abschnitt eines ersten anzuzeigenden Bilds umfasst und einer entsprechenden Linse zugeordnet ist, die durch die Linsenreliefstruktur ausgebildet wird, oder wobei die Anordnung von Bildelementen eine Anordnung von Mikrobildelementen umfasst, wobei die Anordnung von Mikrobildelementen einen Abstand und/oder eine Orientierung aufweist, die sich von dem Abstand und/oder der Orientierung einer Anordnung von Linsen unterscheidet, die durch die Linsenreliefstruktur derart ausgebildet werden, dass eine vergrößerte Version der Mikrobildelemente als ein Ergebnis des Moire-Effekts angezeigt wird.

10. Verfahren nach einem der vorhergehenden Ansprüche, das ferner das Bereitstellen eines reflexionsverstärkenden Materials über der Diffraktionsreliefstruktur umfasst, wobei bevorzugt das reflexionsverstärkende Material ein im Wesentlichen transparentes Material mit hohem Brechungsindex ist, wie etwa ein Metalloxid, das bevorzugt einen Brechungsindex über 1,5, stärker bevorzugt über 1,75, am stärksten bevorzugt über 2,0, aufweist.

11. Verfahren nach einem der vorhergehenden Ansprüche, wobei das erste Material ein erstes, härtbares Material ist und wobei das Ausbilden der Linsenreliefstruktur in der ersten Oberfläche der Schicht aus erstem, härtbarem Material ein Gießen der Linsenreliefstruktur in die erste Oberfläche der Schicht aus erstem, härtbarem Material unter Verwendung eines Gießelements, dessen Oberfläche ein Profil aufweist, das das Konjugat der Linsenreliefstruktur ist, und wenigstens teilweises Härten der Schicht aus erstem, härtbarem Material vor dem Aufbringen der Schicht aus zweitem, härtbarem Material umfasst, wobei bevorzugt das wenigstens teilweise Härten der Schicht aus zweitem, härtbarem Material ebenso wenigstens teilweise die Schicht aus erstem, härtbarem Material härtet.

12. Verfahren nach einem der vorhergehenden Ansprüche, wobei das Aufbringen der Schicht aus erstem Material über der ersten Oberfläche der Trägerschicht das Aufbringen der Schicht aus erstem Material über der ersten Oberfläche der Trägerschicht unter Verwendung eines ersten Gießelements umfasst, wobei optional entweder
das erste Gießelement eine Gießoberfläche aufweist, deren Profil im Wesentlichen flach ist, und der Schritt des Ausbildens der Linsenreliefstruktur in der ersten Oberfläche der Schicht aus erstem Material das Ausbilden der Linsenreliefstruktur in der ersten Oberfläche der Schicht aus erstem Material unter Verwendung eines zweiten Gießelements umfasst, wobei das zweite Gießelement eine Gießoberfläche aufweist, deren Profil ein Konjugat der Linsenreliefstruktur ist; oder
das erste Gießelement eine Gießoberfläche aufweist, deren Profil ein Konjugat der Linsenreliefstruktur ist, und wobei die Schicht aus erstem Material über der ersten Oberfläche der Trägerschicht aufgebracht wird, wobei die Linsenreliefstruktur in der ersten Oberfläche der Schicht aus erstem Material vorab ausgebildet ist.

13. Verfahren nach einem der vorhergehenden Ansprüche, wobei das Aufbringen der Schicht aus zweitem, härtbarem Material über der ersten Oberfläche der Schicht aus erstem Material das Aufbringen der Schicht aus zweitem, härtbarem Material unter Verwendung eines dritten Gießelements umfasst, wobei bevorzugt das Verfahren das Ausbilden einer Diffraktionsreliefstruktur in der ersten Oberfläche der Schicht aus zweitem, härtbarem Material umfasst und das dritte Gießelement eine Oberfläche aufweist, deren Profil das Konjugat der Diffraktionsreliefstruktur ist, und wobei die Schicht aus zweitem, härtbarem Material über der ersten Oberfläche der Schicht aus erstem Material mit der Diffraktionsreliefstruktur aufgebracht ist, die in der ersten Oberfläche der Schicht aus zweitem, härtbarem Material vorab ausgebildet ist.

14. Verfahren zum Verwenden einer Linsenüberführungsstruktur, die nach einem der Ansprüche 1 bis 13 ausgebildet wird, das das Aufbringen der Linsenüberführungsstruktur über einem Substrat und ein Entfernen der Trägerschicht umfasst, wobei bevorzugt das Substrat ein Polymer- oder Papiersubstrat ist und/oder das Substrat ist ein Sicherheitserzeugnissubstrat oder ein Sicherheitsdokumentensubstrat ist.

15. Verfahren nach Anspruch 14, wobei das Substrat eine Anordnung von Bildelementen trägt und wobei das Aufbringen der Linsenüberführungsstruktur über dem Substrat das Aufbringen der Linsenüberführungsstruktur über dem Substrat derart umfasst, dass die Linsenüberführungsstruktur in Verwendung mit der Anordnung von Bildelementen zusammenwirkt, um einen optisch variablen Effekt vorzuweisen, wobei bevorzugt die Anordnung von Bildelementen eine Anordnung von Bildelementen umfasst, die durch eine oder mehrere Diffraktionsreliefstrukturen und/oder eine Anordnung von Nanostrukturen und/oder eine diskontinuierliche Metallschicht definiert ist.

## Revendications

1. Procédé de formation d'une structure de transfert de lentille comprenant :
la fourniture d'une couche de support (1) ;
l'application d'une couche d'un premier matériau (21) sur une première surface de la couche de support (1), la couche du premier matériau (21) étant sensiblement transparente et ayant des première et seconde surfaces opposées, la seconde surface étant disposée entre la couche de support (1) et la première surface ;
la formation d'une structure de relief de lentille dans la première surface de la couche de premier matériau (21) ;
l'application d'une couche d'un second matériau durcissable (26) sur la première surface de la couche de premier matériau (21), le second matériau durcissable (26) étant sensiblement transparent, ayant un indice de réfraction différent d'un indice de réfraction du premier matériau (21), et ayant des première et seconde surfaces opposées, la seconde surface de la couche de second matériau durcissable (26) étant disposée entre la première surface de la couche de second matériau durcissable et la couche de premier matériau (21), et la seconde surface de la couche de second matériau durcissable (26), se conformant à la structure de relief de lentille dans la première surface de la couche de premier matériau ; et
le durcissement, au moins partiellement, de la couche de second matériau durcissable (26) ;
la couche de support (1) étant amovible de la couche de premier matériau (21) ; et
**caractérisé par** soit :
a) la formation d'une structure de relief de diffraction, une structure de relief réfléchissante et/ou une structure de relief de réfraction dans la première surface de la couche de second matériau durcissable ; ou
b) l'application d'une ou plusieurs couches d'espacement optique (136) sur la première surface de la couche de second matériau durcissable, chaque couche d'espacement optique ayant des première et seconde surfaces opposées et formant une structure de relief de diffraction dans la première ou la seconde surface de l'une parmi l'une ou plus de couches d'espacement optique.

2. Procédé selon la revendication 1, dans lequel la couche de second matériau durcissable est appliquée sur la première surface de la couche de premier matériau, en contact avec la première surface de la couche de premier matériau.

3. Procédé selon la revendication 1 ou la revendication 2, comprenant en outre l'application d'une couche anti-adhésive sur la première surface de la couche support, dans lequel l'application de la couche de premier matériau sur la première surface de la couche support comprend l'application de la couche de premier matériau sur la couche anti-adhésive de sorte que la couche anti-adhésive est disposée entre la couche de support et la couche de premier matériau.

4. Procédé selon l'une quelconque des revendications précédentes, dans lequel la résistance au pelage la plus faible entre deux couches quelconques et comportant la couche de support et la couche de premier matériau est la résistance au pelage la plus faible dans la structure de transfert de lentille.

5. Procédé selon l'une quelconque des revendications précédentes, comprenant en outre l'application d'une ou plusieurs couches d'espacement optique sur la première surface de la couche de second matériau durcissable, chaque couche d'espacement optique ayant des première et seconde surfaces opposées, dans lequel de préférence l'étape de durcissement, au moins partiellement, la couche de second matériau durcissable est réalisée en durcissant à travers la ou les couches d'espacement optique.

6. Procédé selon l'une quelconque des revendications précédentes, dans lequel soit
la formation d'une structure de relief de lentille dans la première surface de la couche de premier matériau comprend la formation du conjugué d'une structure de relief convexe dans la première surface de la couche de premier matériau, le premier indice de réfraction étant supérieur au second indice de réfraction ; ou
la formation d'une structure de relief de lentille dans la première surface de la couche de premier matériau comprend la formation du conjugué d'une structure de relief concave dans la première surface de la couche de premier matériau, le premier indice de réfraction étant inférieur au second indice de réfraction.

7. Procédé selon l'une quelconque des revendications précédentes, dans lequel la structure de relief de lentille définit un réseau régulier de lentilles et/ou un réseau de microlentilles, ayant de préférence un diamètre de base de lentille inférieur à 20 micromètres, de préférence inférieur à 10 micromètres, plus préférablement inférieur à 5 micromètres, de préférence inférieur à 1 micromètre.

8. Procédé selon l'une quelconque des revendications précédentes, comprenant en outre la formation d'un réseau d'éléments d'image, chevauchant la structure de relief de lentille dans la première surface de la couche de premier matériau, dans lequel, de préférence, la formation d'un réseau d'éléments d'image comprend la formation d'un réseau d'éléments d'image sur l'une de la première surface de la couche de second matériau durcissable et la première ou la seconde surface de l'une de la ou des couches d'espacement optique, le cas échéant, de préférence, la formation d'un réseau d'éléments d'image comprenant l'impression d'un réseau d'éléments d'image ou la formation d'un réseau d'éléments d'image défini par une ou plusieurs structures de relief de diffraction, par un ou plusieurs réseaux de nanostructures, ou par une couche métallique discontinue.

9. Procédé selon la revendication 8, dans lequel le réseau d'éléments d'image comprend au moins un premier ensemble de parties d'éléments d'image, chaque partie d'élément d'image comprenant une partie d'une première image à afficher et étant associée à une lentille respective formée par le relief de lentille ou le réseau d'éléments d'image comprenant un réseau d'éléments de micro-image, le réseau d'éléments de micro-image ayant un pas et/ou une orientation différents du pas et/ou de l'orientation d'un réseau de lentilles formé par la structure de relief de lentille de sorte qu'une version agrandie des éléments de micro-image est affichée en raison de l'effet de moiré.

10. Procédé selon l'une quelconque des revendications précédentes, comprenant en outre la fourniture d'un matériau améliorant la réflexion sur la structure de relief de diffraction, dans lequel, de préférence, le matériau améliorant la réflexion est un matériau à indice de réfraction élevé sensiblement transparent, tel qu'un oxyde métallique, ayant de préférence un indice de réfraction supérieur à 1,5, plus préférablement supérieur à 1,75, le plus préférablement supérieur à 2,0.

11. Procédé selon l'une quelconque des revendications précédentes, dans lequel le premier matériau est un premier matériau durcissable, et la formation de la structure de relief de lentille dans la première surface de la couche de premier matériau durcissable comprenant la coulée de la structure de relief de lentille dans la première surface de la couche de premier matériau durcissable à l'aide d'un élément coulé dont la surface a un profil qui est le conjugué de la structure de relief de lentille, et le durcissement, au moins partiellement, de la couche de premier matériau durcissable avant d'appliquer la couche de second matériau durcissable, de préférence, le durcissement, au moins partiellement, de la couche de second matériau durcissable durcit également, au moins partiellement, la couche de premier matériau durcissable.

12. Procédé selon l'une quelconque des revendications précédentes, dans lequel l'application de la couche de premier matériau sur la première surface de la couche de support comprend l'application de la couche de premier matériau sur la première surface de la couche de support à l'aide d'un premier élément de coulée, éventuellement soit
le premier élément de coulée ayant une surface de coulée dont le profil est sensiblement plat, et l'étape de formation de la structure de relief de lentille dans la première surface de la couche de premier matériau comprenant la formation de la structure de relief de lentille dans la première surface de la couche de premier matériau à l'aide d'un deuxième élément de coulée, le deuxième élément de coulée ayant une surface de coulée dont le profil est un conjugué de la structure de relief de lentille ; ou
le premier élément de coulée a une surface de coulée dont le profil est un conjugué de la structure de relief de lentille, et la couche de premier matériau étant appliquée sur la première surface de la couche de support avec la structure de relief de lentille préformée dans la première surface de la couche de premier matériau.

13. Procédé selon l'une quelconque des revendications précédentes, dans lequel l'application de la couche de second matériau durcissable sur la première surface de la couche de premier matériau comprend l'application de la couche de second matériau durcissable à l'aide d'un troisième élément de coulée, de préférence, le procédé comprenant la formation d'une structure de relief de diffraction dans la première surface de la couche de second matériau durcissable et le troisième élément de coulée ayant une surface dont le profil est le conjugué de la structure de relief de diffraction, et la couche de second matériau durcissable est appliquée sur la première surface de la couche de premier matériau avec la structure de relief de diffraction préformée dans la première surface de la couche de second matériau durcissable.

14. Procédé d'utilisation d'une structure de transfert de lentille formée selon l'une quelconque des revendications 1 à 13, comprenant l'application de la structure de transfert de lentille sur un substrat et le retrait de la couche de support, de préférence, le substrat étant un substrat en polymère ou en papier et/ou le substrat étant un substrat d'article de sécurité ou un substrat de document de sécurité.

15. Procédé selon la revendication 14, dans lequel le substrat porte une matrice d'éléments d'image et l'application de la structure de transfert de lentille sur le substrat comprenant l'application de la structure de transfert de lentille sur le substrat de sorte que, lorsqu'elle est utilisée, la structure de transfert de lentille coopère avec la matrice de éléments d'image pour présenter un effet optiquement variable, de préférence, le réseau d'éléments d'image comprenant un réseau d'éléments d'image défini par une ou plusieurs structures de relief de diffraction et/ou un réseau de nanostructures et/ou une couche métallique discontinue.
